# EUROPEAN PATENT APPLICATION

(11) **EP 4 252 964 A1**
(43) Date of publication of application: **04.10.2023**
(21) Application number: 21900622.8
(22) Date of filing: 01.12.2021
(51) Int. Cl.: B24B 47/22, B24B 47/18, B24B 49/16, B24B 49/18, B24B 53/00

(54) **AUTOMATED GRINDING SYSTEM**

(30) Priority: 04.12.2020 JP 2020201916
(71) Applicant: METROL CO., LTD., Tachikawa-shi Tokyo 190-0011 (JP)
(72) Inventor: WASA, Yusuke, Tachikawa-shi, Tokyo 190-0011 (JP); KANNO, Takayuki, Tachikawa-shi, Tokyo 190-0011 (JP)
(74) Representative: Ström & Gulliksson AB
(86) International application number: PCT/JP2021/044051
(87) International publication number: WO 2022/118871

(57) **Abstract**

The present invention enables setting of a machining origin that does not cause variation in finished dimensions depending on the skill level of workers, further reduces the difference in production efficiency depending on the workers, and also ensures the safety of the workers. Provided is an automated grinding device for grinding and/or polishing a workpiece, the automated grinding device comprising: a rotary grindstone that grinds and/or polishes a workpiece; a first sensor that detects an attribute value of the workpiece; a second sensor that detects the grindstone diameter of the rotary grindstone; an instruction unit that instructs the rotary grindstone to rotate and move for grinding and/or polishing; and a position output unit that, on the basis of the attribute value of the workpiece, a first margin of error of the attribute value, the grindstone diameter, and a second margin of error of the grindstone diameter, generates positional information including a machining origin with respect to the workpiece by the rotary grindstone, and a safety margin, and outputs the positional information to the instruction unit.

## Description

### TECHNICAL FIELD

The present invention relates to an automatic grinding system.

### BACKGROUND ART

Conventionally, in a case of performing grinding machining and/or polishing machining on a workpiece using a grinder provided with a grindstone, a worker first measures the position and external shape of the workpiece using a touch probe, performs positioning by visually setting a machining origin, and thereafter, starts the machining.

For example, Patent Document 1 discloses a technique of measuring an outer periphery of a workpiece and an end face of a peripheral groove with a touch probe, estimating an outer peripheral shape of the workpiece based on measurement results, comparing the estimated outer peripheral shape with registered finished dimensions, and calling attention when a machining allowance is negative.

Patent Document 1: Japanese Unexamined Patent Application, Publication No. 2019-077001

### DISCLOSURE OF THE INVENTION

### Problems to be Solved by the Invention

When it is necessary for a worker to visually set a machining origin, however, variation in finished dimensions occurs depending on degrees of proficiency of workers, and relatively large differences may arise in production efficiency among the workers. Further, a case is assumed where, at the time of setting a machining origin, safety of the worker is not ensured.

An object of the present invention is to provide an automatic grinding apparatus that is capable of preventing variation in finished dimensions despite of degrees of proficiency of workers, further reducing differences in production efficiency among the workers, and allowing the workers to set a machining origin in a state where safety of the workers is ensured.

### Problems to be Solved by the Invention

An aspect of the present invention provides an automatic grinding system for performing grinding machining and/or polishing machining on a workpiece. The automatic grinding system includes: a rotary grindstone that grinds and/or polishes the workpiece; a first sensor that detects an attribute value of the workpiece; a second sensor that detects a grindstone diameter of the rotary grindstone; an instruction unit that instructs a drive unit of the rotary grindstone to rotate and move the rotary grindstone for the grinding machining and/or the polishing machining; and a position output unit that generates position information including an origin of machining on the workpiece by the rotary grindstone and a safety margin, based on the attribute value of the workpiece, a first allowable error for the attribute value, the grindstone diameter, and a second allowable error for the grindstone diameter, and outputs the position information to the instruction unit.

### Effects of the Invention

The present invention makes it possible to prevent variation in finished dimensions despite of degrees of proficiency of workers, to further reduce differences in production efficiency among the workers, and to allow the workers to set a machining origin in a state where safety of the workers is ensured.

### BRIEF DESCRIPTION OF THE DRAWINGS

FIG. 1 is a diagram showing an overall configuration of an automatic grinding system according to an embodiment of the present invention;
FIG. 2 is a functional block diagram of an automatic grinding apparatus according to the embodiment of the present invention;
FIG. 3 is a functional block diagram of a first sensor according to the embodiment of the present invention;
FIG. 4 is a functional block diagram of a control apparatus according to the embodiment of the present invention;
FIG. 5A is a diagram showing an aspect of machining on a workpiece by a rotary grindstone in the embodiment of the present invention;
FIG. 5B is a diagram showing the aspect of machining on the workpiece by the rotary grindstone in the embodiment of the present invention;
FIG. 6 is a flowchart showing operation of the automatic grinding apparatus according to the embodiment of the present invention;
FIG. 7A is a diagram showing operation of a surface grinder according to an example of the present invention;
FIG. 7B is a diagram showing the operation of the surface grinder according to the example of the present invention;
FIG. 7C is a diagram showing the operation of the surface grinder according to the example of the present invention;
FIG. 7D is a diagram showing the operation of the surface grinder according to the example of the present invention;
FIG. 7E is a diagram showing the operation of the surface grinder according to the example of the present invention;
FIG. 7F is a diagram showing the operation of the surface grinder according to the example of the present invention;
FIG. 8A is a diagram showing operation of a cylindrical grinder according to an example of the present invention;
FIG. 8B is a diagram showing the operation of the cylindrical grinder according to the example of the present invention;
FIG. 8C is a diagram showing the operation of the cylindrical grinder according to the example of the present invention;
FIG. 8D is a diagram showing the operation of the cylindrical grinder according to the example of the present invention;
FIG. 8E is a diagram showing the operation of the cylindrical grinder according to the example of the present invention;
FIG. 9A is a diagram showing operation of an internal grinder according to an example of the present invention;
FIG. 9B is a diagram showing the operation of the internal grinder according to the example of the present invention;
FIG. 9C is a diagram showing the operation of the internal grinder according to the example of the present invention;
FIG. 9D is a diagram showing the operation of the internal grinder according to the example of the present invention;
FIG. 9E is a diagram showing the operation of the internal grinder according to the example of the present invention;
FIG. 10A is a diagram showing a case of grinding a chuck surface by the automatic grinding apparatus according to an example of the present invention;
FIG. 10B is a diagram showing the case of grinding the chuck surface by the automatic grinding apparatus according to the example of the present invention;
FIG. 10C is a diagram showing the case of grinding the chuck surface by the automatic grinding apparatus according to the example of the present invention;
FIG. 10D is a diagram showing the case of grinding the chuck surface by the automatic grinding apparatus according to the example of the present invention;
FIG. 10E is a diagram showing the case of grinding the chuck surface by the automatic grinding apparatus according to the example of the present invention; and
FIG. 10F is a diagram showing the case of grinding the chuck surface by the automatic grinding apparatus according to the example of the present invention.

### PREFERRED MODE FOR CARRYING OUT THE INVENTION

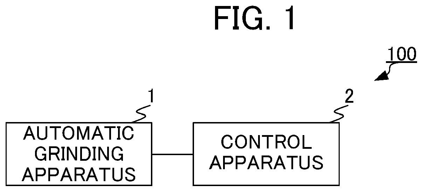

An embodiment of the present invention will be described below with reference to FIGS. 1 to 10F.

### <1 Configuration of embodiment>

### <1.1 Overall configuration>

FIG. 1 is a diagram showing an overall configuration of an automatic grinding system 100 according to the present embodiment. The automatic grinding system 100 is provided with an automatic grinding apparatus 1 and a control apparatus 2.

The automatic grinding apparatus 1 is an apparatus that performs predetermined machine machining such as grinding machining and polishing machining by control of the control apparatus 2.

The automatic grinding apparatus 1 is provided with a motor that is driven to machine a workpiece, a main shaft and a feed shaft attached to the motor, and a jig, a tool, and the like corresponding to each of the shafts. The automatic grinding apparatus 1 performs the predetermined machine machining by driving the motor based on an operation command.

Here, though content of the predetermined machine machining is not especially limited, it is preferable to execute grinding machining and polishing machining with a rotary grindstone as described later especially in the present embodiment. Further, the machine machining may be accompanied by machining on a workpiece but need not be accompanied by machining on a workpiece.

The present embodiment is widely applicable to industrial machines in general as far as a rotary grindstone is used. The industrial machines are various machines, for example, machine tools, machining centers, industrial robots, and robots for services.

The control apparatus 2 controls the main shaft and drive shaft of the automatic grinding apparatus 1 according to a machining program. The control apparatus 2 can be realized by causing a computer apparatus, which includes a CPU, a memory, input/output interfaces, and the like, to execute an appropriate control program.

### <1.2 Configuration of automatic grinding apparatus>

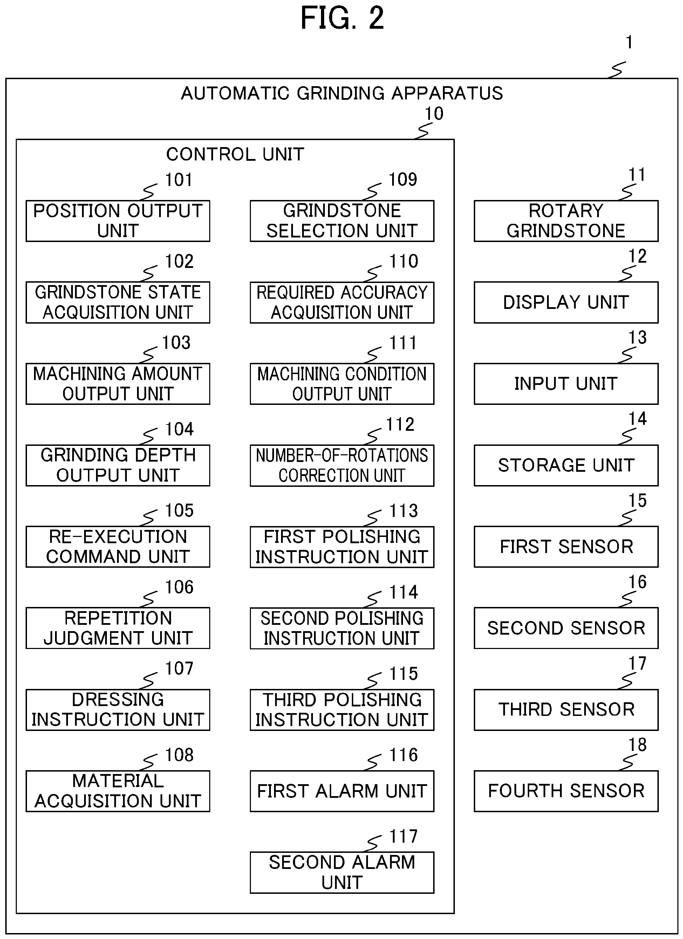

FIG. 2 is a functional block diagram showing a configuration of the automatic grinding apparatus 1. The automatic grinding apparatus 1 is provided with a control unit 10, a rotary grindstone 11, a display unit 12, an input unit 13, a storage unit 14, a first sensor 15, a second sensor 16, a third sensor 17 and a fourth sensor 18.

The control unit 10 has a CPU, a ROM, a RAM, a CMOS memory, and the like, and these are configured to be mutually communicable via a bus and are well known to one skilled in the art.

The CPU is a processor that performs overall control of the automatic grinding apparatus 1. By reading a system program and an application program stored in the ROM via the bus, and controlling the entire automatic grinding apparatus 1 according to the system program and the application program, the CPU makes a configuration so that the control unit 10 realizes functions of a position output unit 101, a grindstone state acquisition unit 102, a machining amount output unit 103, a grinding depth output unit 104, a re-execution command unit 105, a repetition judgment unit 106, a dressing instruction unit 107, a material acquisition unit 108, a grindstone selection unit 109, a required accuracy acquisition unit 110, a machining condition output unit 111, a number-of-rotations correction unit 112, a first polishing instruction unit 113, a second polishing instruction unit 114, a third polishing instruction unit 115, a first alarm unit 116, and a second alarm unit 117 as shown in FIG. 2.

As described later, the position output unit 101 generates position information including a machining origin, which is a starting point of machining on a workpiece by the rotary grindstone 11, and a safety margin, based on attribute values of the workpiece detected by the first sensor 15, allowable errors of the attribute values, the grindstone diameter of the rotary grindstone 11 detected by the second sensor 16, and an allowable error of the grindstone diameter, and outputs the position information to an instruction unit 22 provided in the control apparatus 2 described later.

Here, the attribute values of the workpiece detected by the first sensor 15 include one or more of the positions of the workpiece, the size (dimensions) of the workpiece, an attribute value about the surface state of the workpiece.

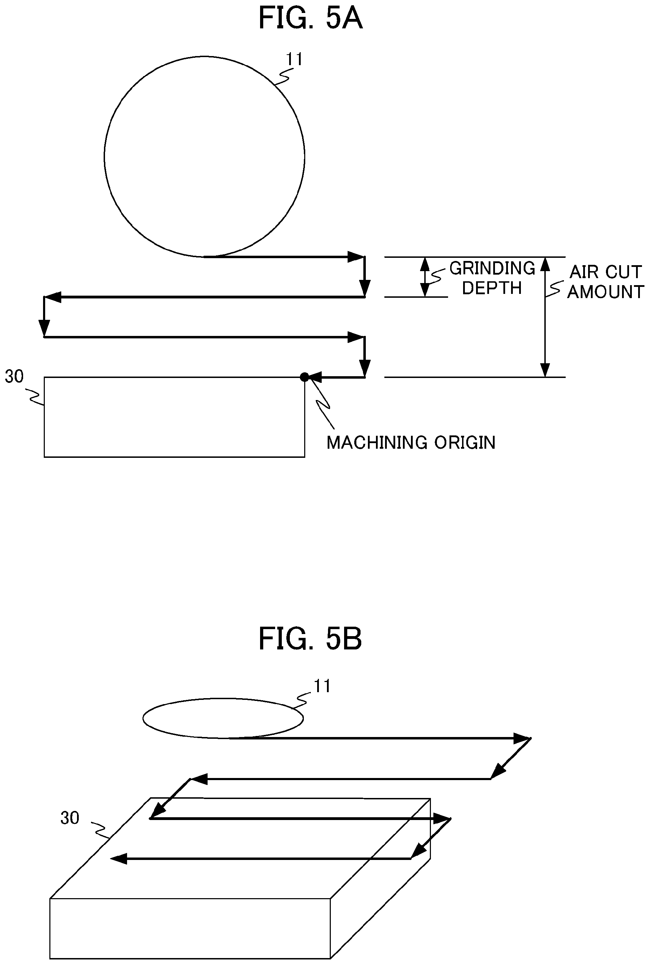

The machining origin refers to a starting point of machining on the workpiece by the rotary grindstone 11. FIGS. 5A and 5B are diagrams showing an aspect of machining on a workpiece 30 by the rotary grindstone 11. The rotary grindstone 11 grinds the workpiece 30 by, after approaching the workpiece 30 by a predetermined grinding depth, moving in a first direction vertical to an approach direction while rotating, and grinds the workpiece 30 by, after approaching the workpiece 30 by the predetermined grinding depth again after moving in the first direction by a predetermined distance while grinding, moving in a direction opposite to the first direction while rotating. By repeating the reciprocating motion, the rotary grindstone 11 grinds the workpiece 30 by an amount set in advance.

At this time, the operation of the machining program is checked by setting a Z axis at a position higher than an original position set by the machining program to do a dry run, and a distance from the surface of the workpiece 30 in the Z direction to do the dry run is referred to as an air cut amount. Hereinafter, "the air cut amount" itself may be referred to as "a safety margin" in some cases. Further, a point at which the rotary grindstone 11 touches the workpiece 30 first to start machining will be referred to as a machining origin. By securing a safety margin corresponding to the air cut amount, a user of the automatic grinding apparatus 1 can check the operation of the machining program without considering interference between the rotary grindstone 11 and the workpiece 30.

The position output unit 101 generates position information including the machining origin and the safety margin.

The grindstone state acquisition unit 102 acquires state information about the rotary grindstone 11. Specifically, the grindstone state acquisition unit 102 acquires the state information about the rotary grindstone 11 based on information inputted from the input unit 13 by the user of the automatic grinding apparatus 1, information stored in the storage unit 14, and sensing information detected by the second sensor 16. As the state information about the rotary grindstone 11, for example, information about the grindstone diameter, grit size, abrasive grain type, granularity, bonding degree, structure, bond type, and bond subdivision mark of the rotary grindstone 11 are exemplified, and, furthermore, information about a maximum peripheral speed used, a grinding depth, a diameter at the time of being installed, and a diameter that requires replacement is included. Especially, it becomes possible for the grindstone state acquisition unit 102 to acquire the grindstone diameter of the rotary grindstone 11 measured by the second sensor 16, and use the grindstone diameter for correction of the machining origin. At this time, it becomes possible to detect deformation of a rotation shaft supporting the rotary grindstone 11, by the fourth sensor 18. When the fourth sensor 18 is a temperature sensor, it is possible to estimate deformation of the rotation shaft by detecting the temperature of the rotation shaft supporting the rotary grindstone 11. When the fourth sensor 18 is, for example, a strain gauge, it is possible to detect deformation of the rotation shaft based on a detected value of the strain gauge.

The machining amount output unit 103 calculates an amount of machining on a workpiece by the rotary grindstone 11, based on the attribute values of the workpiece detected by the first sensor 15, the state information about the rotary grindstone 11 acquired by the grindstone state acquisition unit 102, a target value of accuracy requested for machining dimensions acquired by the required accuracy acquisition unit 110, for example, from a machining drawing and CAD data, and a target value stored in the storage unit 14 described later, and outputs the amount of machining to the instruction unit 22 provided in the control apparatus 2 described later.

The grinding depth output unit 104 calculates a grinding depth, which is an amount of machining per approach of the rotary grindstone 11, based on the amount of machining calculated by the machining amount output unit 103, the attribute values of the workpiece, and the state information about the rotary grindstone 11, and outputs the grinding depth to the instruction unit 22 provided in the control apparatus 2 described later. The instruction unit 22 instructs the rotary grindstone 11 to rotate and move, based on the amount of machining and the grinding depth.

Though the amount of machining calculated by the machining amount output unit 103 and the grinding depth calculated by the grinding depth output unit 104 are individually calculated as described above, the amount of machining and the grinding depth may be the same value if the accuracy of machining by the automatic grinding apparatus 1 is high.

The re-execution command unit 105 outputs a command to re-execute grinding machining and/or polishing machining to the instruction unit 22 based on attribute values of the workpiece detected by the first sensor 15 after grinding machining and/or polishing machining by the rotary grindstone 11. Especially when the machining accuracy of the workpiece subjected to machining by the rotary grindstone 11 has not reached a target value in terms of dimension accuracy, surface roughness, and the like, the re-execution command unit 105 outputs the machining re-execution command to the instruction unit 22 provided in the control apparatus 2 described later.

The repetition judgment unit 106 judges whether or not to repeatedly execute detection of the grindstone diameter after grinding machining and/or polishing machining, based on the attribute values of the workpiece detected by the first sensor 15 and/or the state information about the rotary grindstone 11 acquired by the grindstone state acquisition unit 102. More specifically, if it is judged that the accuracy of machining by the automatic grinding apparatus 1 has not reached predetermined accuracy, from the dimensions of the workpiece detected by the first sensor 15, material of the workpiece acquired by the material acquisition unit 108, the state information about the rotary grindstone 11 acquired by the grindstone state acquisition unit 102, as attribute values of the workpiece, detection of the grindstone diameter by the grindstone state acquisition unit 102 using the second sensor 16 is repeatedly executed. In addition to the attribute values of the workpiece detected by the first sensor 15 and/or the state information about the rotary grindstone 11 acquired by the grindstone state acquisition unit 102 or instead of at least either the attribute values or the state information, the repetition judgment unit 106 may judge whether or not to repeatedly execute detection of the grindstone diameter after grinding machining and/or polishing machining, based on deformation of the rotation shaft supporting the rotary grindstone 11, which is detected by the fourth sensor 18.

The dressing instruction unit 107 outputs an instruction to dress the rotary grindstone 11, based on a load on the rotation shaft supporting the rotary grindstone 11 detected by the third sensor 17. More specifically, if an amount of change in the load on the rotation shaft supporting the rotary grindstone 11 per unit time exceeds an allowable value due to dulling and clogging of the rotary grindstone 11, the dressing instruction unit 107 outputs the dressing instruction to the display unit 12 to propose performing dressing to the user of the automatic grinding apparatus 1. When the automatic grinding apparatus 1 is provided with a dressing unit (not shown) that dresses the rotary grindstone 11 by automatic control, the dressing instruction unit 107 may output the dressing instruction to the dressing unit. In conventional techniques, dressing is performed periodically or only when the machining accuracy in terms of the accuracy of workpiece dimensions, surface roughness, and the like has not reached a reference value. In addition, based on change in the load on the rotation shaft due to dulling and clogging of the rotary grindstone 11, it becomes possible to preventively perform dressing earlier than before, and it is possible to lengthen the life of a grindstone and prevent improper machining.

The material acquisition unit 108 acquires the material of the workpiece. More specifically, the material acquisition unit 108 acquires the material of the workpiece based on information inputted by the user of the automatic grinding apparatus 1 using the input unit 13, and information stored in the storage unit 14.

The grindstone selection unit 109 selects a rotary grindstone 11 that is optimal for the workpiece based on the material acquired by the material acquisition unit 108. More specifically, the grindstone selection unit 109 presents a proposal to the user of the automatic grinding apparatus 1 by outputting an optimal grindstone selection result to the display unit 12 based on the material acquired by the material acquisition unit 108. Or alternatively, the grindstone selection unit 109 may output the optimal grindstone selection result to a drive unit (not shown) of the rotary grindstone 11 or the control apparatus 2, and the drive unit of the rotary grindstone 11 or the control apparatus 2 may automatically select an optimal rotary grindstone 11 based on the selection result generated by the grindstone selection unit 109.

In order to sufficiently maintain the cutting quality and lengthen the life of a rotary grindstone 11 and efficiently perform polishing/grinding of a workpiece, it is necessary to select a rotary grindstone 11 that is suitable for machining thereof. In the present situation, a rotary grindstone 11 is selected based on experience and judgment of each worker. When the grindstone diameter of the rotary grindstone 11 becomes small, abrasive grain easily fall off. Further, since grinding burn easily occurs due to increase in the area of contact between the rotary grindstone 11 and a workpiece, the rotary grindstone 11 is generally not used when the size becomes about two-thirds of the original size. In order to cope with these problems, the grindstone selection unit 109 selects a grindstone that is optimal for a workpiece based on the material acquired by the material acquisition unit 108. Especially, by referring to past machining data stored in the storage unit 14, it becomes possible to trace relationships among factors, and it also becomes possible to share and standardize knowledge and experiences in workers.

The required accuracy acquisition unit 110 acquires required accuracy of machining on the workpiece. More specifically, the required accuracy acquisition unit 110 acquires the required accuracy of machining, based on information inputted by the user of the automatic grinding apparatus 1 using the input unit 13, and information stored in the storage unit 14.

The grindstone selection unit 109 may select a rotary grindstone 11 that is optimal for the workpiece based on the required accuracy of machining on the workpiece acquired by the required accuracy acquisition unit 110 in addition to the material acquired by the material acquisition unit 108.

The machining condition output unit 111 outputs machining conditions recommended as machining conditions for the workpiece by referring to past machining data stored in the storage unit 14, based on the material of the workpiece acquired by the material acquisition unit 108 and the required accuracy acquired by the required accuracy acquisition unit 110. More specifically, the machining condition output unit 111 presents a proposal to the user of the automatic grinding apparatus 1 by outputting the recommended machining conditions to the display unit 12. Or alternatively, the machining condition output unit 111 may output the recommended machining conditions to the drive unit (not shown) of the rotary grindstone 11 or the control apparatus 2, and the drive unit of the rotary grindstone 11 or the control apparatus 2 may drive the rotary grindstone 11 based on the recommended machining conditions.

The number-of-rotations correction unit 112 corrects the number of rotations of the rotary grindstone 11 based on the grindstone diameter of the rotary grindstone 11 acquired by the grindstone state acquisition unit 102 via the second sensor 16. More specifically, the number-of-rotations correction unit 112 corrects the number of rotations of the rotary grindstone 11, following change in the diameter from the diameter at the time of starting machining until the time of replacement of the rotary grindstone 11. At present, a maximum peripheral speed used is prescribed for each rotary grindstone. The maximum peripheral speed used must be necessarily observed for safety, and each rotary grindstone must not be used at a speed exceeding the maximum peripheral speed used in any case. The rotary grindstone maximum peripheral speed used is prescribed for each product. Since the peripheral speed of each rotary grindstone is determined by the number of rotations of the main shaft and the diameter of the rotary grindstone, the peripheral speed of the rotary grindstone decreases as the diameter decreases. By correcting the number of rotations by the number-of-rotations correction unit 112, it becomes possible to correct the peripheral speed of the rotary grindstone 11.

The first polishing instruction unit 113 compares the number of times the re-execution command has been outputted by the re-execution command unit 105 with a predetermined number of times, and outputs an instruction to polish a chuck surface on which the workpiece is seated, based on a comparison result. More specifically, the first polishing instruction unit 113 outputs the instruction to polish the chuck surface on which the workpiece is seated when the number of times the re-execution command has been outputted by the re-execution command unit 105 exceeds the predetermined number of times. Further, the first polishing instruction unit 113 proposes polishing of the chuck surface to the user of the automatic grinding apparatus 1 by outputting a polishing instruction to the display unit 12. Or alternatively, the first polishing instruction unit 113 may output a polishing instruction to the control apparatus 2, and the instruction unit 22 of the control apparatus 2 may instruct the drive unit of the rotary grindstone 11 to rotate and move the rotary grindstone 11 to polish the chuck surface, based on the polishing instruction.

The second polishing instruction unit 114 compares attribute values of the workpiece before being subjected to machining with allowable values, and outputs an instruction to polish the chuck surface on which the workpiece is seated, based on a comparison result. More specifically, for example, the second polishing instruction unit 114 outputs the instruction to polish the chuck surface on which the workpiece is seated when a value detected by the first sensor 15 is significantly deviated from an allowable value. Further, the second polishing instruction unit 114 proposes polishing of the chuck surface to the user of the automatic grinding apparatus 1 by outputting a polishing instruction to the display unit 12. Or alternatively, the second polishing instruction unit 114 may output a polishing instruction to the control apparatus 2, and the instruction unit 22 of the control apparatus 2 may instruct the drive unit of the rotary grindstone 11 to rotate and move the rotary grindstone 11 to polish the chuck surface, based on the polishing instruction.

The third polishing instruction unit 115 compares the attribute values of the workpiece subjected to machining with target values, and outputs an instruction to polish the chuck surface on which the workpiece is seated, based on a comparison result. More specifically, for example, the third polishing instruction unit 115 outputs the instruction to polish the chuck surface on which the workpiece is seated when the value detected by the first sensor 15 is not within a target value range. Further, the third polishing instruction unit 115 proposes polishing of the chuck surface to the user of the automatic grinding apparatus 1 by outputting the polishing instruction to the display unit 12. Or alternatively, the third polishing instruction unit 115 may output the polishing instruction to the control apparatus 2, and the instruction unit 22 of the control apparatus 2, which is described later, may instruct the drive unit of the rotary grindstone 11 to rotate and move the rotary grindstone 11 to polish the chuck surface, based on the polishing instruction. Polishing of a chuck surface is performed to cope with the chuck surface going down by the workpiece being seated on the same position on the chuck surface for a long time.

When the number of times the re-execution command has been outputted by the re-execution command unit 105 reaches a predetermined number of times, the first alarm unit 116 issues an alarm. This is done for coping with the possibility of a failure having occurred in the automatic grinding apparatus 1.

When the grindstone diameter acquired by the grindstone state acquisition unit 102 is below an allowable value, the second alarm unit 117 issues an alarm. This is intended to notify that it is time to replace the rotary grindstone 11 because the diameter of the rotary grindstone 11 is below the allowable value.

The rotary grindstone 11 is a grindstone used to grind and/or polish a workpiece by being pressed against the contact surface of the workpiece in a state of being rotated by the drive unit (not shown). The rotary grindstone 11 may be such that is called, for example, a superabrasive grindstone (diamond or CBN) or a general grindstone (a vitrified grindstone or a resinoid grindstone). The shape may be, for example, a cylindrical shape or a blade shape.

The display unit 12 is an apparatus that displays, for example, a dressing instruction, an optimal grindstone selection result, recommended machining conditions, and an instruction to polish a chuck surface on which a workpiece is seated. The display unit 12 can be realized, for example, by a liquid crystal monitor.

The input unit 13 is an apparatus operated by the user of the automatic grinding apparatus 1 to input, for example, the state information about the rotary grindstone 11, information about the material of the workpiece, and information about required accuracy of machining. The input unit 13 can be realized, for example, by a touch panel laminated on a monitor as the display unit 12 or by a reading apparatus that reads data from a USB memory or a scanner, or via a network. The data may include drawings.

The storage unit 14 is an apparatus that stores, for example, the state information about the rotary grindstone 11, the information about the material of the workpiece, the information about required accuracy of machining, and past machining data.

The first sensor 15 is a sensor that detects attribute values of a workpiece. Here, the attribute values of a workpiece include, for example, values about the dimensions of the workpiece, and a surface state. Further, the first sensor 15 may be, for example, a touch probe, an image sensor capable of 3D scanning, or a laser sensor.

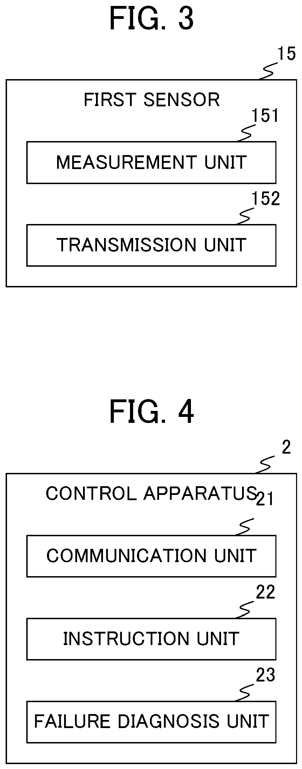

FIG. 3 is a functional block diagram showing functions of the first sensor 15. The first sensor 15 is provided with a measurement unit 151 and a transmission unit 152. The measurement unit 151 senses attribute values of a workpiece. The transmission unit 152 transmits a result of sensing by the measurement unit 151 to the control apparatus 2. A method for transmitting the sensing result by the transmission unit 152 may be a wired or wireless method.

By the first sensor 15 being provided with the transmission unit 152, it becomes possible for the control apparatus 2 to diagnose a failure in the first sensor 15 based on a measurement result of the first sensor 15, and it becomes possible to transmit self-diagnosis information by a self-diagnosis function of the first sensor 15 to the control apparatus 2 though it is not shown in a diagram, as described later. Thereby, it becomes possible to prevent unexpected temporary shutdown or idling of the automatic grinding apparatus 1.

FIG. 3 is a functional block diagram showing functions of the first sensor 15, and the second to fourth sensors 16 to 18 have similar configurations.

The second sensor 16 is a sensor that detects the grindstone diameter of the rotary grindstone 11. The second sensor 16 may be, for example, an air microsensor.

The third sensor 17 is a sensor that detects a load on the rotation shaft of the rotary grindstone 11. The third sensor 17 may be, for example, a torque sensor. Or alternatively, the third sensor 17 may be a current sensor that detects an amount of current for driving the motor that causes the rotary grindstone 11 to rotate.

The fourth sensor 18 is a sensor that detects the temperature of the shaft supporting the rotary grindstone 11. The fourth sensor 18 may be, for example, a temperature sensor. Or alternatively, the fourth sensor 18 may be a sensor that detects deformation of the shaft supporting the rotary grindstone 11. In this case, the fourth sensor 18 may be, for example, a strain gauge.

### <1.3 Configuration of control apparatus>

FIG. 4 is a functional block diagram showing functions of the control apparatus 2. The control apparatus 2 is provided with a communication unit 21, the instruction unit 22, and a failure diagnosis unit 23.

The communication unit 21 communicates with the automatic grinding apparatus 1. More specifically, the communication unit 21 transmits an instruction, which is generated by the instruction unit 22 described later, to the drive unit (not shown) of the rotary grindstone 11 to rotate and move the rotary grindstone 11 to grind and/or polish a workpiece, to the automatic grinding apparatus 1. Further, the communication unit 21 receives position information generated by the position output unit 101, an amount of machining outputted by the machining amount output unit 103, a grinding depth outputted by the grinding depth output unit 104, a machining re-execution command generated by the re-execution command unit 105, and the like. Further, the communication unit 21 receives measured values or self-diagnosis information from the first to fourth sensors 15 to 18.

The instruction unit 22 instructs the drive unit of the rotary grindstone 11 to rotate and move the rotary grindstone 11 to grind and/or polish the workpiece.

The failure diagnosis unit 23 diagnoses a failure in at least one of the first to fourth sensors 15 to 18, based on a result of receiving the measured values or the self-diagnosis information from the first to fourth sensors 15 to 18.

### <2 Operation of automatic grinding apparatus>

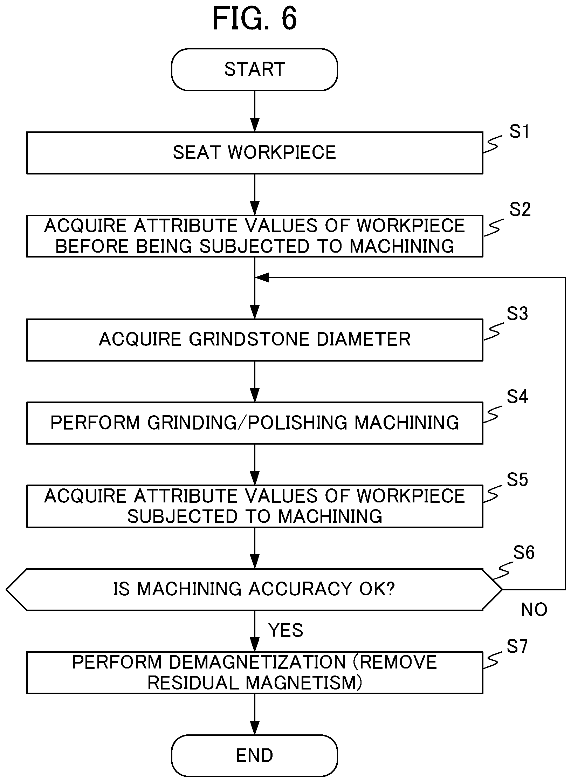

FIG. 6 is a flowchart showing operation of the automatic grinding apparatus 1. The operation of the automatic grinding apparatus 1 will be described below with reference to FIG. 6.

At step S1, the user of the automatic grinding apparatus 1 causes a workpiece to be seated on a chuck surface such as a magnet chuck. At this time, the user may manually cause the workpiece to be seated or may cause the workpiece to be seated by automatic control of the automatic grinding apparatus 1. Further, a seating sensor may be used to judge whether the workpiece is normally seated or not.

At step S2, the control unit 10 acquires attribute values of the workpiece before being subjected to machining, from the first sensor 15. In addition, the material acquisition unit 108 may acquire the material of the workpiece as an attribute value of the workpiece.

At step S3, the grindstone state acquisition unit 102 of the automatic grinding apparatus 1 acquires the grindstone diameter of the rotary grindstone 11 by the second sensor 16. In addition, the grindstone state acquisition unit 102 may acquire other state information about the rotary grindstone 11 from the storage unit 14.

At step S4, the automatic grinding apparatus 1 executes grinding machining and/or polishing machining on the workpiece using the rotary grindstone 11. More specifically, the position output unit 101 generates position information about the rotary grindstone 11 that includes a machining origin and a safety margin, based on the attribute values of the workpiece acquired at step S2, allowable errors for the attribute values, the grindstone diameter of the rotary grindstone 11 acquired at step S3, and an allowable error for the grindstone diameter. Further, the machining amount output unit 103 calculates an amount of machining on the workpiece by the rotary grindstone 11, based on the attribute values of the workpiece, the state information about the rotary grindstone 11, a target value of required accuracy acquired by the required accuracy acquisition unit 110, and a target value stored in the storage unit 14. Furthermore, the grinding depth output unit 104 calculates a grinding depth, which is an amount of machining on the workpiece per approach, based on the attribute values of the workpiece, the state information about the rotary grindstone 11, and the amount of machining calculated by the machining amount output unit 103. The instruction unit 22 instructs the drive unit of the rotary grindstone 11 to rotate and move the rotary grindstone 11, based on the position information, the amount of machining, and the grinding depth.

At step S4, the grindstone selection unit 109 may select a rotary grindstone 11 that is optimal for the workpiece, based on the material of the workpiece acquired by the material acquisition unit 108 and the required accuracy acquired by the required accuracy acquisition unit 110. Furthermore, the machining condition output unit 111 may output machining conditions recommended as machining conditions for the workpiece, based on the material of the workpiece and the required accuracy. Furthermore, the number-of-rotations correction unit 112 may correct the number of rotations of the rotary grindstone 11, based on the grindstone diameter of the rotary grindstone 11.

At step S5, the control unit 10 acquires attribute values of the workpiece subjected to machining by the first sensor 15.

At step S6, if machining accuracy of the workpiece subjected to machining is within a target value range (S6: YES), the process transitions to step S7. If the machining accuracy of the workpiece subjected to machining is not within the target value range (S6: NO), the process transitions to step S3. More specifically, if the machining accuracy of the workpiece subjected to machining is not within the target value range, the re-execution command unit 105 outputs a command to re-execute grinding machining and/or polishing machining, to the instruction unit 22. At this time, if it is judged by the repetition judgment unit 106 that detection of the grindstone diameter is to be repeated, the process transitions to step S3. If it is judged that detection of the grindstone diameter is not to be repeated, the process may transition not to step S3 but to step S4.

At step S7, demagnetization of the workpiece is performed. That is, residual magnetism remaining in the workpiece is removed. After that, the entire process is ended.

If a polishing instruction is outputted by any of the first to third polishing instruction units 113 to 115 somewhere in the above flow, the chuck surface on which the workpiece is seated is polished.

Further, it is also possible to perform, according to the flow shown in FIG. 6, machining on the workpiece, which may be roughly done, at the starting point of work using the automatic grinding apparatus 1, for example, during warm-up operation or early in the morning and, after a predetermined time passes, switch to finishing machining.

### <3 Effects of embodiment>

The automatic grinding system 100 according to the present embodiment is an automatic grinding apparatus for performing grinding machining and/or polishing machining on the workpiece 30, the automatic grinding apparatus including: the rotary grindstone 11 that grinds and/or polishes the workpiece 30; the first sensor 15 that detects an attribute value of the workpiece 30; the second sensor 16 that detects a grindstone diameter of the rotary grindstone 11; the instruction unit 22 that instructs the drive unit of the rotary grindstone 11 to rotate and move the rotary grindstone 11 for the grinding machining and/or the polishing machining; and the position output unit 101 that generates position information including an origin of machining on the workpiece 30 by the rotary grindstone 11 and a safety margin, based on the attribute value of the workpiece 30, a first allowable error for the attribute value, the grindstone diameter, and a second allowable error for the grindstone diameter, and outputs the position information to the instruction unit 22.

Thereby, it becomes possible to prevent occurrence of variation in machining accuracy according to degrees of proficiency of workers, further reduce differences in production efficiency among the workers, and enable such setting of the machining origin that safety of the workers is ensured.

Further, by machining dimensions being highly accurate, and the number of repetitions of machining and dimension measurement being reduced, productivity is enhanced. Furthermore, by an air cut amount being reduced, it becomes possible to shorten non-machining time.

Furthermore, by a machining process being standardized by using the first sensor 15 and the second sensor 16, dependence on individual workers is removed.

The automatic grinding system 100 described above may further include: the grindstone state acquisition unit 102 that acquires state information about the rotary grindstone 11; the machining amount output unit 103 that calculates an amount of machining on the workpiece 30 by the rotary grindstone 11 based on the attribute value of the workpiece 30 and the state information about the rotary grindstone 11, and outputs the amount of machining to the instruction unit 22; and the grinding depth output unit 104 that calculates a grinding depth, which is an amount of machining on the workpiece 30 per approach from the rotary grindstone 11, based on the amount of machining, the attribute value of the workpiece 30, and the state information about the rotary grindstone 11, and outputs the grinding depth to the instruction unit 22.

Thereby, it becomes possible to automatically set the grinding depth corresponding to the amount of machining, without being based on the experience and intuition of each worker.

The automatic grinding system 100 described above may further include the re-execution command unit 105 that outputs a command to re-execute the grinding machining and/or the polishing machining based on the attribute value of the workpiece 30 subjected to the grinding machining and/or the polishing machining, to the instruction unit 22.

Thereby, it becomes possible to re-execute machining not by artificially judging the state of the workpiece 30 subjected to machining based on the experience and intuition of each worker but by automatically judging the state.

The automatic grinding system 100 described above may further include the first alarm unit 116 that issues an alarm when the number of times the re-execution command has been outputted by the re-execution command unit 105 reaches a predetermined number of times.

Thereby, it becomes possible to, for example, in the case of repeating re-execution of machining many times because of existence of a problem or an error in the automatic grinding system 100, call the worker's attention.

The automatic grinding system 100 described above may further include the first polishing instruction unit 113 that compares the number of times the re-execution command has been outputted by the re-execution command unit 105 with the predetermined number of times, and outputs an instruction to polish a chuck surface on which the workpiece 30 is seated, based on a comparison result.

Thereby, it becomes possible to, for example, in the case of re-execution of machining being tried many times because of a problem of the seating state of the workpiece 30, attempt to solve the problem of the seating state by outputting the instruction to polish the chuck surface.

The automatic grinding system 100 described above may further include: the third sensor 17 that detects a load on a rotation shaft supporting the rotary grindstone 11; and the dressing instruction unit 107 that outputs an instruction to dress the rotary grindstone 11, based on the load.

Thereby, it becomes possible to manage the timing of dressing by monitoring the state of the rotary grindstone 11 such as dulling and clogging.

The automatic grinding system 100 described above may further include: the fourth sensor 18 that detects deformation of the rotation shaft supporting the rotary grindstone 11; the repetition judgment unit 106 that judges whether or not to repeatedly execute detection of the grindstone diameter after the grinding machining and/or the polishing machining, based on the attribute value of the workpiece 30 and/or state information about the rotary grindstone 11, and/or a result of the detecting by the fourth sensor 18.

Thereby, it becomes possible to prevent detection of the grindstone diameter from being repeated many times when the workpiece 30 and the rotary grindstone 11 are in favorable states.

Further, in the automatic grinding system 100 described above, at least one of the first to fourth sensors 15 to 18 may include the transmission unit 152 that transmits measured values and/or self-diagnosis information to the control apparatus 2 of the automatic grinding apparatus 1; and the control apparatus 2 may include the failure diagnosis unit 23 that diagnoses a failure in at least one of the first to fourth sensors 15 to 18, based on received results of the measured values and/or the self-diagnosis information.

Thereby, by using the self-diagnosis function and failure diagnosis function of the first to fourth sensors 15 to 18, it becomes easy to grasp time of maintenance, and it becomes possible to prevent unexpected temporary shutdown and idling of the operation of the automatic grinding apparatus 1.

The automatic grinding system 100 described above may further include: the material acquisition unit 108 that acquires material of the workpiece 30; and the grindstone selection unit 109 that selects the rotary grindstone 11, which is optimal for the workpiece 30, based on the material.

Thereby, it becomes possible to use the rotary grindstone 11 that is optimal for the material of the workpiece 30.

The automatic grinding system 100 described above may further include: the material acquisition unit 108 that acquires material of the workpiece 30; the required accuracy acquisition unit 110 that acquires required accuracy of the grinding machining and/or the polishing machining; the storage unit 14 that stores therein past machining data; and the machining condition output unit 111 that outputs recommended machining conditions by referring to the machining data, based on the material of the workpiece 30 and the required accuracy.

Thereby, it becomes possible to perform machining under optimal machining conditions according to the material of the workpiece 30 and required accuracy.

The automatic grinding system 100 described above may further include the number-of-rotations correction unit 112 that corrects the number of rotations of the rotary grindstone 11 based on the grindstone diameter.

Thereby, it becomes possible to correct the peripheral speed of the rotary grindstone 11 so that the peripheral speed of the rotary grindstone 11 is close to the maximum peripheral speed that must be observed for safety within a range not exceeding the maximum peripheral speed.

The automatic grinding system 100 described above may further include the second polishing instruction unit 114 that compares the attribute value of the workpiece 30 before being subjected to machining with an allowable value, and outputs an instruction to polish the chuck surface on which the workpiece 30 is seated, based on a comparison result.

Thereby, it becomes possible to, when a value detected by the first sensor 15 before machining is significantly deviated from the allowable value because of a problem of the seating state of the workpiece 30, attempt to solve the problem of the seating state by outputting the instruction to polish the chuck surface.

The automatic grinding system 100 described above may further include the third polishing instruction unit 115 that compares the attribute value of the workpiece 30 subjected to machining with a target value, and outputs an instruction to polish the chuck surface on which the workpiece 30 is seated, based on a comparison result.

Thereby, it becomes possible to, when the value detected by the first sensor 15 after machining is significantly deviated from the target value because of a problem of the seating state of the workpiece 30, attempt to solve the problem of the seating state by outputting the instruction to polish the chuck surface.

The automatic grinding system 100 described above may further include the second alarm unit 117 that issues an alarm when the grindstone diameter is below an allowable value.

Thereby, it becomes possible to call the worker's attention to notify that it is time to replace the rotary grindstone 11 because the diameter of the rotary grindstone 11 is below the allowable value.

### <4 Examples>

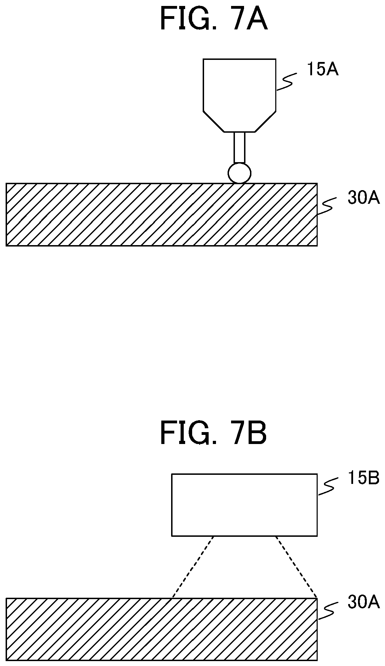

Description will be made below on, when the automatic grinding apparatus 1 according to the above embodiment is each of a surface grinder, a cylindrical grinder, and an internal grinder, the case of grinding or polishing a workpiece and the case of the automatic grinding apparatus 1 polishing the chuck surface, with reference to FIGS. 7A to 10F.

### <4.1 Surface grinder>

FIGS. 7A to 7F are explanatory diagrams about operation when the automatic grinding apparatus 1 is a surface grinder.

After causing a workpiece 30A to be seated as step S1 described above, the automatic grinding apparatus 1 acquires attribute values of the workpiece 30A before being subjected to machining by a probe 15A or an image sensor 15B as the first sensor 15 as step S2 described above, as shown in FIGS. 7A and 7B. For example, the automatic grinding apparatus 1 acquires the dimensions of the workpiece 30A by the probe 15A from above the workpiece 30A in a substantially perpendicular direction or acquires data about the surface state of the workpiece 30A by the image sensor 15B.

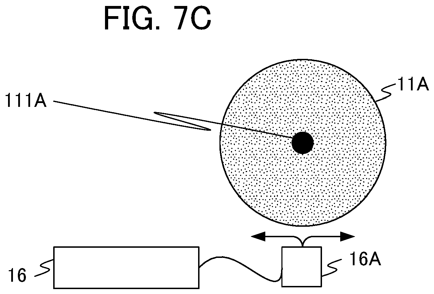

Next, as step S3 described above, the automatic grinding apparatus 1 acquires the grindstone diameter of a rotary grindstone 11A as shown in FIG. 7C. More specifically, an air microsensor 16 as the second sensor 16 emits air from below the rotary grindstone 11A rotating around a shaft 111A, from a nozzle 16A connected to the air microsensor 16, and the air microsensor 16 acquires the grindstone diameter of the rotary grindstone 11A based on a detected pressure value.

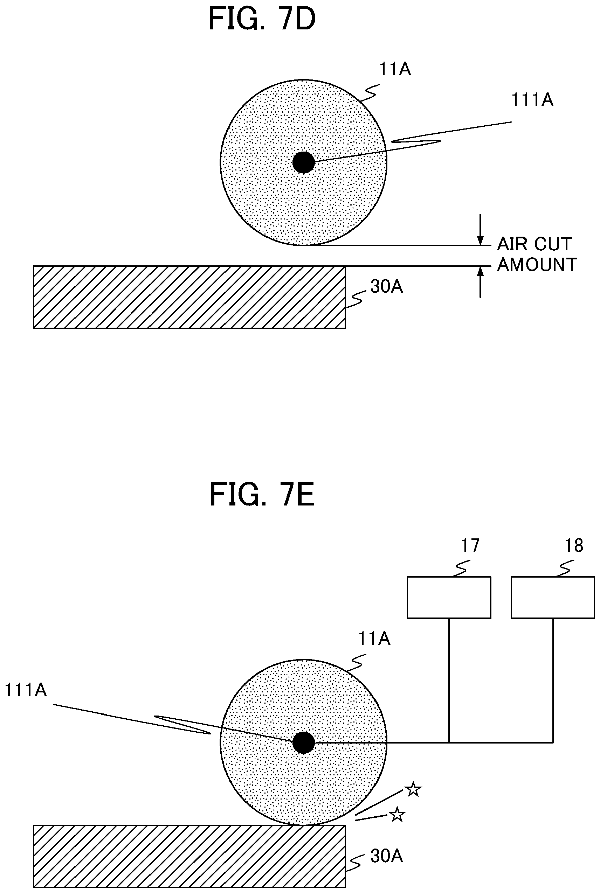

Next, as step S4 described above, the automatic grinding apparatus 1 performs grinding/polishing machining on the workpiece 30A with the rotary grindstone 11A as shown in FIGS. 7D and 7E. More specifically, after securing an air cut amount above the workpiece 30A in a substantial perpendicular direction as shown in FIG. 7D, the automatic grinding apparatus 1 performs grinding/polishing machining on the workpiece 30A by a grinding depth per time with the rotary grindstone 11A each time as shown in FIG. 7E. At this time, the automatic grinding apparatus 1 detects a load and deformation of the shaft 111A by the third sensor 17 and the fourth sensor 18 installed in the shaft 111A or the drive unit (not shown) that causes the shaft 111A to rotate. As described above, the dressing instruction unit 107 may output an instruction to dress the rotary grindstone 11A based on the torque of the rotary grindstone 11A.

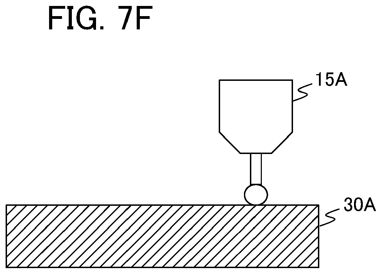

Next, as step S5 described above, the automatic grinding apparatus 1 acquires attribute values of the workpiece 30A subjected to machining with the probe 15A as the first sensor 15 as shown in FIG. 7F. The automatic grinding apparatus 1 may acquire the attribute values of the workpiece 30A subjected to machining with the image sensor 15B instead of the probe 15A, though it is not shown.

After that, as step S6 shown in FIG. 6, if the machining accuracy of the workpiece 30A subjected to machining is within an allowable range (S6: YES), the automatic grinding apparatus 1 performs demagnetization as the process of step S7. If the machining accuracy of the workpiece 30A subjected to machining is not within the allowable range (S6: NO), the process returns to step S3.

### <4.2 Cylindrical grinder>

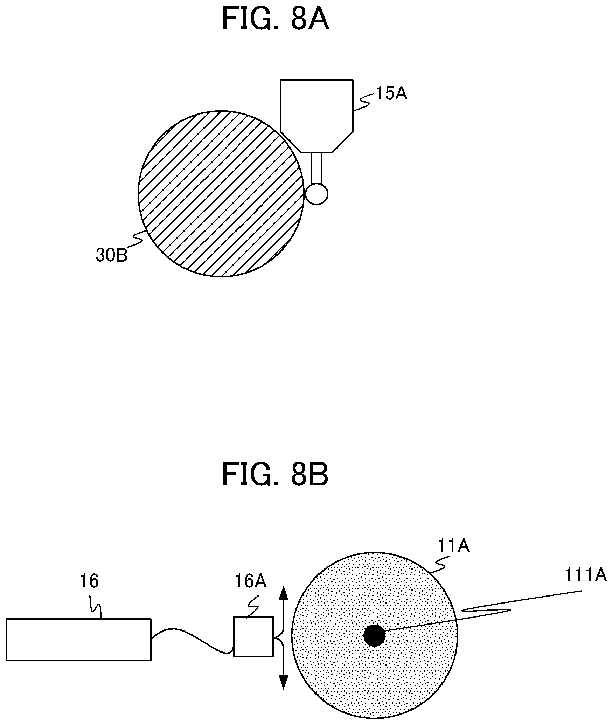

FIGS. 8A to 8E are explanatory diagrams about operation when the automatic grinding apparatus 1 is a cylindrical grinder.

After causing a workpiece 30B to be seated as step S1 described above, the automatic grinding apparatus 1 acquires attribute values of the workpiece 30B before being subjected to machining with the probe 15A as the first sensor 15 as step S2 described above, as shown in FIG. 8A. For example, the automatic grinding apparatus 1 acquires the dimensions of the workpiece 30B with the probe 15A in a substantially horizontal direction of the workpiece 30B.

Next, as step S3 described above, the automatic grinding apparatus 1 acquires the grindstone diameter of the rotary grindstone 11A as shown in FIG. 8B. More specifically, the air microsensor 16 as the second sensor 16 emits air in a substantially horizontal direction of the rotary grindstone 11A rotating around the shaft 111A, from the nozzle 16A connected to the air microsensor 16, and the air microsensor 16 acquires the grindstone diameter of the rotary grindstone 11A based on a detected pressure value.

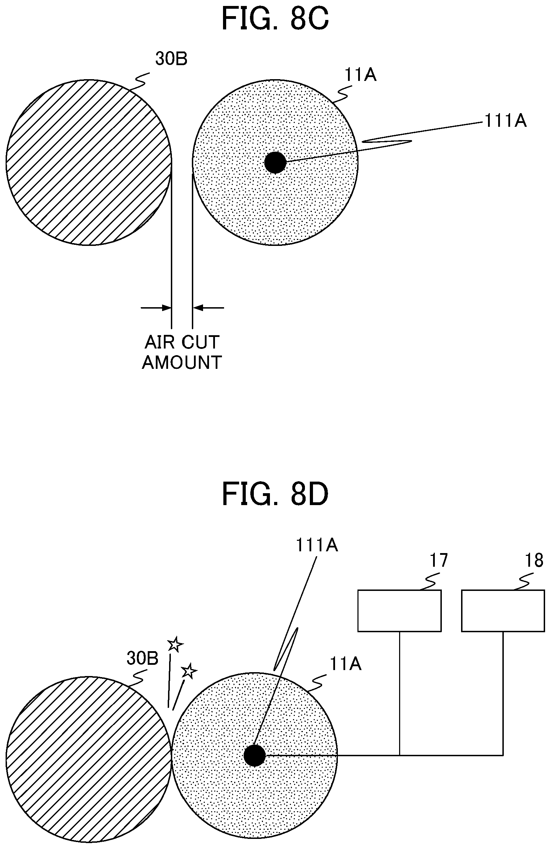

Next, as step S4 described above, the automatic grinding apparatus 1 performs grinding/polishing machining on the workpiece 30B with the rotary grindstone 11A as shown in FIGS. 8C and 8D. More specifically, after securing an air cut amount in a substantially horizontal direction from the workpiece 30B as shown in FIG. 8C, the automatic grinding apparatus 1 performs grinding/polishing machining on the workpiece 30B by a grinding depth per time with the rotary grindstone 11A each time as shown in FIG. 8D. At this time, the automatic grinding apparatus 1 detects a load and deformation of the shaft 111A by the third sensor 17 and the fourth sensor 18 installed in the shaft 111A or the drive unit (not shown) that causes the shaft 111A to rotate. As described above, the dressing instruction unit 107 may output an instruction to dress the rotary grindstone 11A based on the torque of the rotary grindstone 11A.

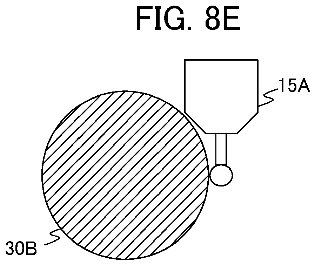

Next, as step S5 described above, the automatic grinding apparatus 1 acquires attribute values of the workpiece 30B subjected to machining with the probe 15A as the first sensor 15 as shown in FIG. 8E. The automatic grinding apparatus 1 may acquire the attribute values of the workpiece 30B subjected to machining with the image sensor 15B instead of the probe 15A, though it is not shown.

After that, as step S6 shown in FIG. 6, if the machining accuracy of the workpiece 30B subjected to machining is within an allowable range (S6: YES), the automatic grinding apparatus 1 performs demagnetization as the process of step S7. If the machining accuracy of the workpiece 30B subjected to machining is not within the allowable range (S6: NO), the process returns to step S3.

<4.3 Internal grinder>

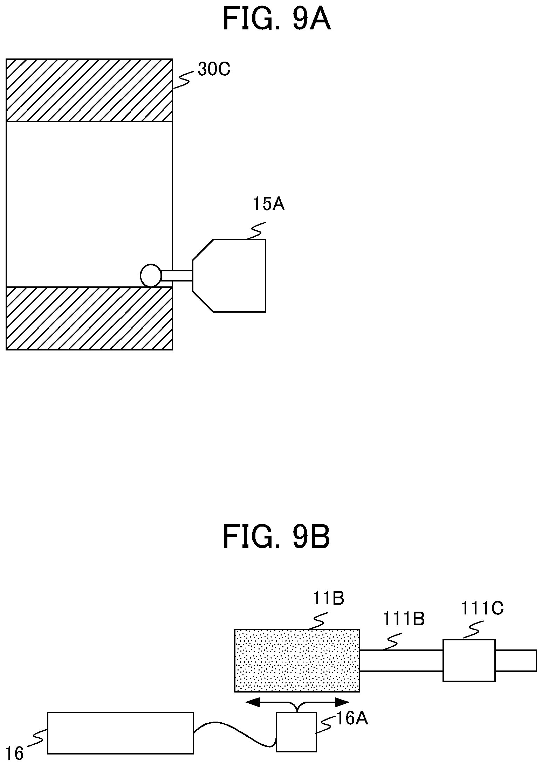

FIGS. 9A to 9E are explanatory diagrams about operation when the automatic grinding apparatus 1 is an internal grinder.

After causing a workpiece 30C to be seated as step S1 described above, the automatic grinding apparatus 1 acquires attribute values of the workpiece 30C before being subjected to machining with the probe 15A as the first sensor 15 as step S2 described above as shown in FIG. 9A. For example, the automatic grinding apparatus 1 acquires the dimensions of the workpiece 30C from above a cylindrical void on the inner surface of the workpiece 30C in a substantially perpendicular direction.

Next, as step S3 described above, the automatic grinding apparatus 1 acquires the grindstone diameter of a rotary grindstone 11B as shown in FIG. 9B. More specifically, the air microsensor 16 as the second sensor 16 emits air from below the rotary grindstone 11B rotating around a shaft 111B in a substantially perpendicular direction, from the nozzle 16A connected to the air microsensor 16, and the air microsensor 16 acquires the grindstone diameter of the rotary grindstone 11B based on a detected pressure value.

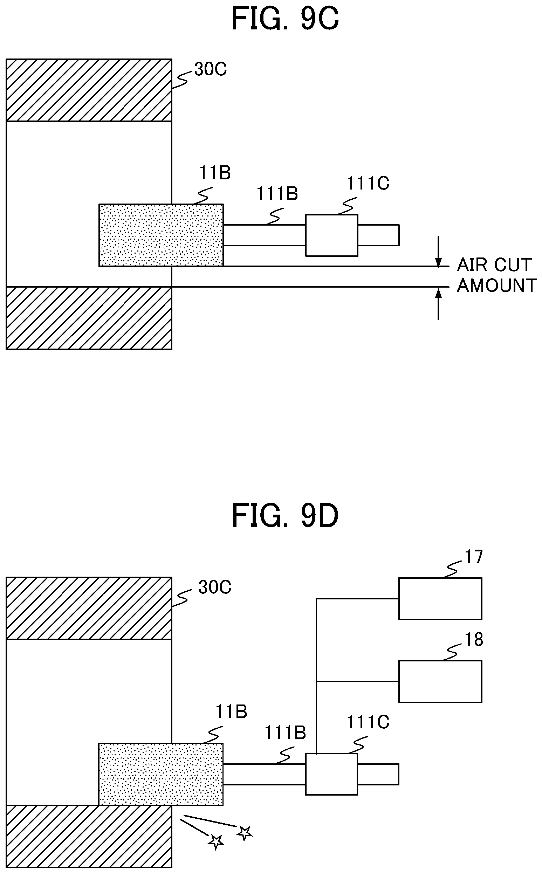

Next, as step S4 described above, the automatic grinding apparatus 1 performs grinding/polishing machining on the workpiece 30C with the rotary grindstone 11B as shown in FIGS. 9C and 9D. More specifically, after securing an air cut amount in a substantially perpendicular direction from the workpiece 30C as shown in FIG. 9C, the automatic grinding apparatus 1 performs grinding/polishing machining on the workpiece 30C by a grinding depth per time with the rotary grindstone 11B each time as shown in FIG. 9D. At this time, the automatic grinding apparatus 1 detects a load and deformation of the shaft 111B by the third sensor 17 and the fourth sensor 18 installed in the shaft 111B or a drive unit 111C that causes the shaft 111B to rotate. As described above, the dressing instruction unit 107 may output an instruction to dress the rotary grindstone 11B based on the torque of the rotary grindstone 11B.

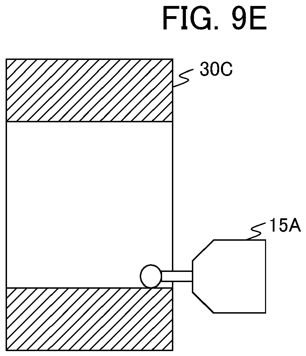

Next, as step S5 described above, the automatic grinding apparatus 1 acquires attribute values of the workpiece 30C subjected to machining with the probe 15A as the first sensor 15 as shown in FIG. 9E. The automatic grinding apparatus 1 may acquire the attribute values of the workpiece 30C subjected to machining, with the image sensor 15B instead of the probe 15A, though it is not shown.

After that, as step S6 shown in FIG. 6, if the machining accuracy of the workpiece 30C subjected to machining is within an allowable range (S6: YES), the automatic grinding apparatus 1 performs demagnetization as the process of step S7. If the machining accuracy of the workpiece 30C subjected to machining is not within the allowable range (S6: NO), the process returns to step S3.

### <4.4 Polishing of chuck surface>

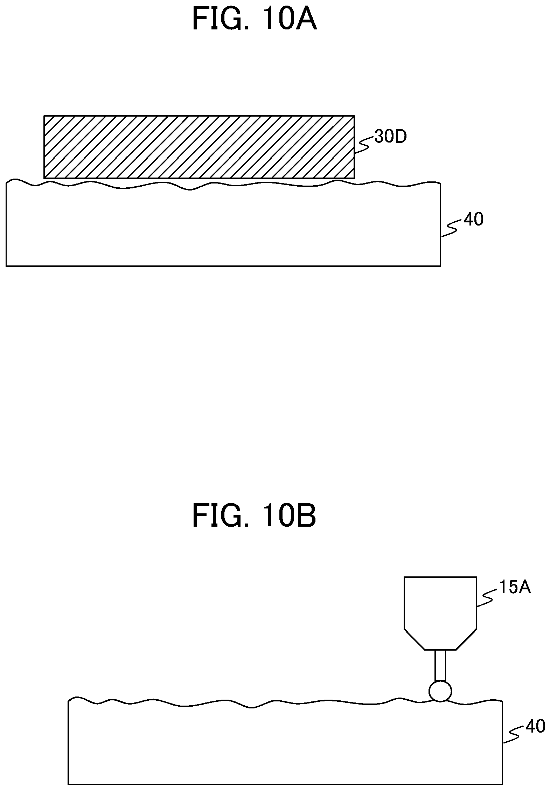

FIGS. 10A to 10F are explanatory diagrams about operation in the case of polishing a chuck surface with the automatic grinding apparatus 1.

As step S1 described above, a workpiece 30D is seated on a magnet chuck 40 as shown in FIG. 10A. It is assumed that, for example, values of the dimensions of the workpiece 30D have been acquired as attribute values of the workpiece 30D, but the values significantly deviate from allowable values.

At this time, as step S2 described above, the automatic grinding apparatus 1 acquires attribute values of the magnet chuck 40 with the probe 15A as the first sensor 15 in a state in which the workpiece 30D has been removed. For example, the automatic grinding apparatus 1 acquires dimension values of and values about the surface state of the magnet chuck 40 from above in a substantially perpendicular direction with the probe 15A.

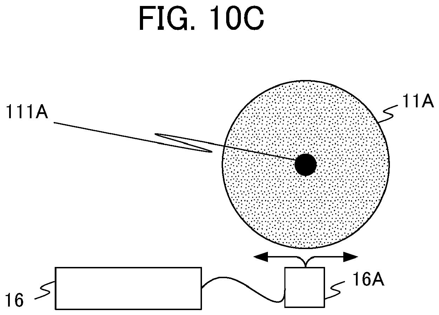

Next, as step S3 described above, the automatic grinding apparatus 1 acquires the grindstone diameter of the rotary grindstone 11A as shown in FIG. 10C. More specifically, the air microsensor 16 as the second sensor 16 emits air from below the rotary grindstone 11A rotating around the shaft 111A in a substantially perpendicular direction, from the nozzle 16A connected to the air microsensor 16, and the air microsensor 16 acquires the grindstone diameter of the rotary grindstone 11A based on a detected pressure value.

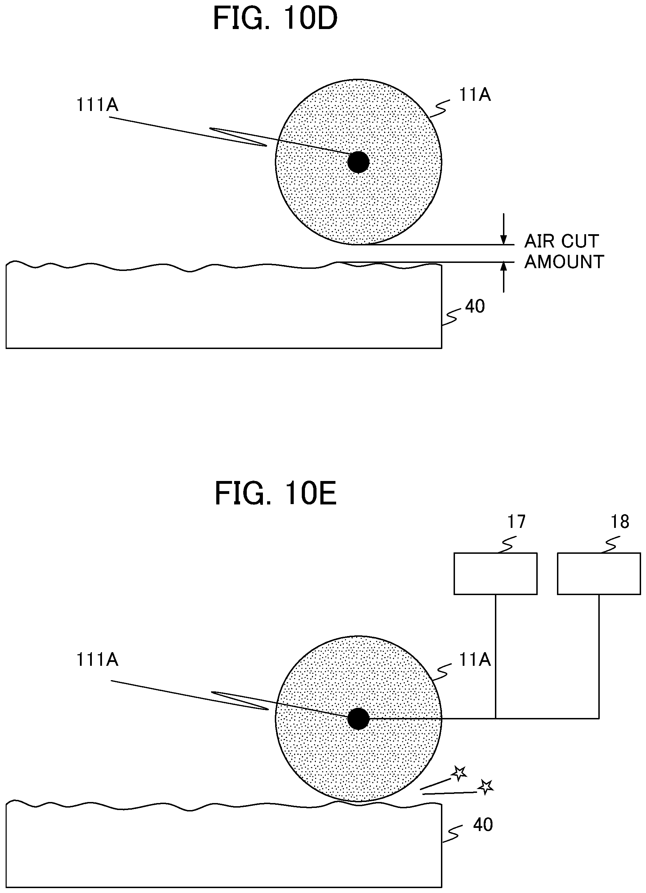

Next, as step S4 described above, the automatic grinding apparatus 1 performs polishing machining on the magnet chuck 40 with the rotary grindstone 11A as shown in FIGS. 10D and 10E. More specifically, after securing an air cut amount in a substantial perpendicular direction from the magnet chuck 40 as shown in FIG. 10D, the automatic grinding apparatus 1 performs polishing machining on the magnet chuck 40 by a grinding depth per time with the rotary grindstone 11A each time as shown in FIG. 10E. At this time, the automatic grinding apparatus 1 detects a load and deformation of the shaft 111A by the third sensor 17 and the fourth sensor 18 installed in the shaft 111A or the drive unit (not shown) that causes the shaft 111A to rotate. As described above, the dressing instruction unit 107 may output an instruction to dress the rotary grindstone 11A based on the torque of the rotary grindstone 11A.

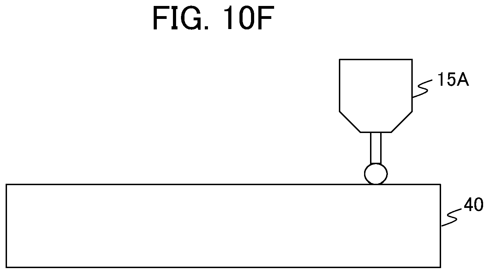

Next, as step S5 described above, the automatic grinding apparatus 1 acquires dimension values as attribute values of the magnet chuck 40 after machining, with the probe 15A as the first sensor 15 as shown in FIG. 10F. The automatic grinding apparatus 1 may acquire a value of a surface state as an attribute value of the magnet chuck 40 after machining, with the image sensor 15B instead of the probe 15A, though it is not shown.

After that, as step S6 shown in FIG. 6, if the machining accuracy of the magnet chuck 40 after machining is within an allowable range (S6: YES), demagnetization is performed as the process of step S7. If the machining accuracy of the magnet chuck 40 after machining is not within the allowable range (S6: NO), the process returns to step S3.

### <5 Modifications>

### <5.1 Modification 1>

In the automatic grinding apparatus 1 according to the above embodiment, an instruction to polish a chuck surface on which a workpiece is seated is outputted based on the number of times a re-execution command has been outputted by the re-execution command unit 105, comparison between attribute values of the workpiece before being subjected to machining and allowable values, and comparison between attribute values of the workpiece subjected to machining and target values. The present invention, however, is not limited thereto. For example, the instruction to polish the chuck surface on which a workpiece is seated may be outputted based on the number of times of machining (the number of workpieces machined).

### <5.2 Modification 2>

Further, though the automatic grinding apparatus 1 and the control apparatus 2 are separate bodies in the above embodiment, the present invention is not limited thereto. For example, the control apparatus 2 and the automatic grinding apparatus 1 may be integrated by the control apparatus 2 being incorporated in the automatic grinding apparatus 1.

### <5.3 Modification 3>

Further, in the above embodiment, the automatic grinding apparatus 1 may be realized as a robot. In this case, the control apparatus 2 may be a robot control apparatus.

### <5.4 Modification 4>

Further, in the above embodiment, a configuration is also possible in which the input unit 13 exists outside the automatic grinding apparatus 1, and each piece of data is inputted from outside of the automatic grinding apparatus 1 via a network. Furthermore, a configuration is also possible in which the control apparatus 2 controls the automatic grinding apparatus 1 via a network.

### <5.5 Modification 5>

Further, in the above embodiment, a grinding depth for dressing may be managed by detecting a load of the rotation shaft and an amount of current for driving the motor that causes the rotary grindstone 11, 11A or 11B to rotate, by the third sensor 17, which is configured with a torque sensor for detecting a load of the rotation shaft of the rotary grindstone 11, 11A or 11B, a current sensor for detecting an amount of current for driving the motor that causes the rotary grindstone 11, 11A or 11B to rotate, or the like.

Specifically, for example, values of grinding depths for dressing corresponding to values of loads of the rotation shaft and values of amounts of current for driving the motor, which are detected by the third sensor 17, are stored in a table in the storage unit 14 in advance. The dressing instruction unit 107 outputs a dressing instruction to perform dressing with a stored grinding depth value.

### <5.6 Modification 6>

Further, in the above embodiment, by detecting surface roughness of a workpiece by the first sensor 15 configured with a touch probe, which is a sensor for detecting attribute values of the workpiece, that is, values of the dimensions of the workpiece and a value indicating a surface state, an image sensor capable of 3D scanning, a laser sensor, or the like, and outputting a dressing instruction, dressing timing may be managed, and a grinding depth for dressing may be managed.

Specifically, for example, a value of a threshold for a value of surface roughness of a workpiece detected by the first sensor 15 is stored in a table in the storage unit 14 in advance. If a value of surface roughness of a workpiece detected by the first sensor 15 exceeds the threshold, the dressing instruction unit 107 outputs a dressing instruction to perform dressing. Further, a value of a grinding depth for dressing corresponding to the value of surface roughness of the workpiece detected by the first sensor 15 is stored in a table in the storage unit 14 in advance. The dressing instruction unit 107 outputs the dressing instruction to perform dressing with the stored grinding depth value. Furthermore, by the dressing instruction unit 107 outputting an instruction to dress the rotary grindstone 11 based on both of the value of surface roughness of the workpiece detected by the first sensor 15 described above and the load of the rotation shaft supporting the rotary grindstone 11 detected by the third sensor 17 in the above embodiment, the timing of dressing may be managed.

### <5.7 Modification 7>

Further, in the above embodiment, based on both of the detection of a load on the rotation shaft and an amount of current for driving the motor that causes the rotary grindstone 11 to rotate, by the third sensor 17 in the above modification 5, and the detection of surface roughness of a workpiece by the first sensor 15 in the above modification 6, the grinding depth for dressing may be managed.

Specifically, for example, a value of a grinding depth for dressing corresponding to a combination of the value of the load of the rotation shaft and the value of the amount of current for driving the motor detected by the third sensor 17, and the value of surface roughness of the workpiece detected by the first sensor 15 is stored in a table in the storage unit 14 in advance. The dressing instruction unit 107 outputs a dressing instruction to perform dressing with the stored grinding depth value. In the present modification 7 and the modification 6 described before, the second sensor 16 configured with an air microsensor may be used instead of the first sensor 15.

According to the configurations of the above modifications 5 to 7, it becomes possible to detect change in the surface state and the dimensions of the rotary grindstone 11, and it becomes possible to set an appropriate grinding depth for dressing. Further, even when the dimensions of the rotary grindstone 11 change due to thermal expansion of the rotary grindstone 11 or shrinkage due to rotation of the rotary grindstone 11, it is possible to, by performing the above detection before performing grinding/polishing machining on a workpiece and before performing dressing, easily detect that the dimension of the grindstone diameter of the rotary grindstone 11 has changed and correct a value of the grindstone diameter detected by the second sensor 16 as necessary. Therefore, it becomes possible to prevent re-execution of machining from being repeated more than necessary.

### EXPLANATION OF REFERENCE NUMERALS

- 1:: Automatic grinding apparatus
- 2:: Control apparatus
- 10:: Control unit
- 22:: Instruction unit
- 23:: Failure diagnosis unit
- 100:: Automatic grinding system
- 101:: Position output unit
- 102:: Grindstone state acquisition unit
- 103:: Machining amount output unit
- 104:: Grinding depth output unit
- 105:: Re-execution command unit
- 106:: Repetition judgment unit
- 107:: Dressing instruction unit
- 108:: Material acquisition unit
- 109:: Grindstone selection unit
- 110:: Required accuracy acquisition unit
- 111:: Machining condition output unit
- 112:: Number-of-rotations correction unit
- 113:: First polishing instruction unit
- 114:: Second polishing instruction unit
- 115:: Third polishing instruction unit
- 116:: First alarm unit
- 117:: Second alarm unit

## Claims

1. An automatic grinding system for performing grinding machining and/or polishing machining on a workpiece, the automatic grinding system comprising:
a rotary grindstone that grinds and/or polishes the workpiece;
a first sensor that detects an attribute value of the workpiece;
a second sensor that detects a grindstone diameter of the rotary grindstone;
an instruction unit that instructs a drive unit of the rotary grindstone to rotate and move the rotary grindstone for the grinding machining and/or the polishing machining; and
a position output unit that generates position information including an origin of machining on the workpiece by the rotary grindstone and a safety margin, based on the attribute value of the workpiece, a first allowable error for the attribute value, the grindstone diameter, and a second allowable error for the grindstone diameter, and outputs the position information to the instruction unit.

2. The automatic grinding system according to claim 1, further comprising:
a grindstone state acquisition unit that acquires state information about the rotary grindstone;
a machining amount output unit that calculates an amount of machining on the workpiece by the rotary grindstone based on the attribute value of the workpiece and the state information about the rotary grindstone, and outputs the amount of machining to the instruction unit; and
a grinding depth output unit that calculates a grinding depth, which is an amount of machining on the workpiece per approach from the rotary grindstone, based on the amount of machining, the attribute value of the workpiece, and the state information about the rotary grindstone, and outputs the grinding depth to the instruction unit.

3. The automatic grinding system according to claim 1 or 2, further comprising:
a re-execution command unit that outputs, to the instruction unit, a command to re-execute the grinding machining and/or the polishing machining based on the attribute value of the workpiece subjected to the grinding machining and/or the polishing machining.

4. The automatic grinding system according to claim 3, further comprising:
a first alarm unit that issues an alarm when a number of times the re-execution command has been outputted by the re-execution command unit reaches a predetermined number of times.

5. The automatic grinding system according to claim 3 or 4, further comprising:
a first polishing instruction unit that compares a number of times the re-execution command has been outputted by the re-execution command unit with a predetermined number of times, and outputs an instruction to polish a chuck surface on which the workpiece is seated, based on a comparison result.

6. The automatic grinding system according to any one of claims 1 to 5, further comprising:
a third sensor that detects a load on a rotation shaft supporting the rotary grindstone; and
a dressing instruction unit that outputs an instruction to dress the rotary grindstone, based on the load.

7. The automatic grinding system according to any one of claims 1 to 6, further comprising:
a dressing instruction unit that outputs an instruction to dress the rotary grindstone, based on the attribute value of the workpiece detected by the first sensor.

8. The automatic grinding system according to claim 6 or 7, wherein
the dressing instruction unit outputs a grinding depth for dressing of the rotary grindstone, based on the load.

9. The automatic grinding system according to any one of claims 6 to 8, wherein
the dressing instruction unit outputs a grinding depth for dressing of the rotary grindstone, based on the detecting of the attribute value of the workpiece by the first sensor.

10. The automatic grinding system according to any one of claims 1 to 9, further comprising:
a fourth sensor that detects deformation of a rotation shaft supporting the rotary grindstone; and
a repetition judgment unit that judges whether or not to repeatedly execute detection of the grindstone diameter after the grinding machining and/or the polishing machining, based on the attribute value of the workpiece, and/or state information about the rotary grindstone, and/or a result of the detecting by the fourth sensor.

11. The automatic grinding system according to claim 10, wherein
at least one of the first to fourth sensors comprises a transmission unit that transmits measured values and/or self-diagnosis information to a control apparatus of the automatic grinding system; and
the control apparatus comprises a failure diagnosis unit that diagnoses a failure in at least one of the first to fourth sensors, based on received results of the measured values and/or the self-diagnosis information.

12. The automatic grinding system according to any one of claims 1 to 11, further comprising:
a material acquisition unit that acquires material of the workpiece; and
a grindstone selection unit that selects the rotary grindstone, which is optimal for the workpiece, based on the material.

13. The automatic grinding system according to any one of claims 1 to 12, further comprising:
a material acquisition unit that acquires material of the workpiece;
a required accuracy acquisition unit that acquires required accuracy of the grinding machining and/or the polishing machining;
a storage unit that stores therein past machining data; and
a machining condition output unit that outputs recommended machining conditions by referring to the machining data, based on the material of the workpiece and the required accuracy.

14. The automatic grinding system according to any one of claims 1 to 13, further comprising:
a number-of-rotations correction unit that corrects a number of rotations of the rotary grindstone based on the grindstone diameter.

15. The automatic grinding system according to any one of claims 1 to 14, further comprising:
a second polishing instruction unit that compares the attribute value of the workpiece before being subjected to machining with an allowable value, and outputs an instruction to polish a chuck surface on which the workpiece is seated, based on a comparison result.

16. The automatic grinding system according to any one of claims 1 to 15, further comprising:
a third polishing instruction unit that compares the attribute value of the workpiece subjected to machining with a target value, and outputs an instruction to polish a chuck surface on which the workpiece is seated, based on a comparison result.

17. The automatic grinding system according to any one of claims 1 to 16, further comprising:
a second alarm unit that issues an alarm when the grindstone diameter is below an allowable value.
